# EUROPEAN PATENT SPECIFICATION

(11) **EP 4 142 469 B1**
(45) Date of publication and mention of the grant of the patent: **20.11.2024**
(21) Application number: 21719278.0
(22) Date of filing: 09.04.2021
(51) Int. Cl.: A01F 15/14

(54) **TAILLESS KNOTTER FOR BALER**
KNOTER
NOUEUR

(30) Priority: 28.04.2020 US 202063016790 P
(43) Date of publication of application: 08.03.2023
(73) Proprietor: Agco Corporation, Duluth, Georgia 30096 (US)
(72) Inventor: BECKER, David, Hesston, Kansas 67062 (US); WELLER, Lucas, Hesston, Kansas 67062 (US); KUHN, Allen, Hesston, Kansas 67062 (US)
(74) Representative: AGCO Intellectual Property Department
(86) International application number: PCT/IB2021/052962
(87) International publication number: WO 2021/220091

(56) References cited:
- EP-B1- 3 788 865
- WO-A1-2015/014616
- US-A- 3 441 302
- US-A- 3 615 112
- US-A- 4 074 623

## Description

### CROSS REFERENCE TO RELATED APPLICATIONS

This application claims the benefit of U.S. Provisional Application No. 63/016,790, filed April 28, 2020.

### BACKGROUND OF THE INVENTION

### Field of Invention

This invention relates to agricultural balers and, more particularly, to a baler for forming rectangular bales having a bale knotting system using twine to bind the bales.

### Description of Related Art

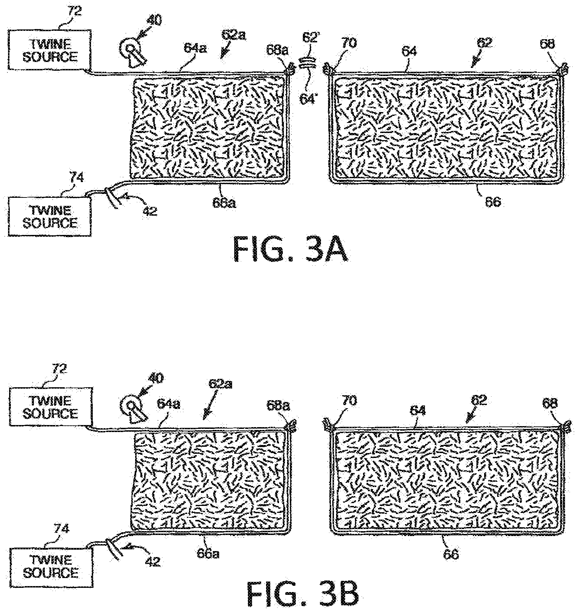

Agricultural balers for binding bales of crop materials with strands of a binding material, such as twine, are well known in the art. Typically, balers are equipped with means to wrap twine around the formed bale and tie off the twine to secure the bale. This includes a knotter assembly having a knotter disc rotated by a powered drive shaft that controls a rotational movement of the components of the knotter assembly. Agricultural balers, utilizing knotter assemblies that form two knots on every loop for binding a bale have been available for many years. For example, U.S. Pat. No. 4,074,623, assigned to Hesston Corporation, which is now part of the assignee of the present application, discloses a knotter assembly of the double knotter type. Referring to FIG. 3A, the knotter assembly forms a loop 62 made from two strands of binding material, i.e., one strand 66 from a first supply of binding material 72 along the normally top side of the bale and a second strand 66 from a second supply of binding material 74 along the normally bottom of the bale and its two opposite ends. The two strands 62, 64 thus fully circumscribe the bale and are circumferential complements of one another. Two knots 68 and 70 appear in the loop 62 at those locations where the strands 64 and 66 are substantially end-to-end. Such a knotter assembly uses a bill hook for forming the knot, a twine disc in combination with a retainer for retaining the strands when forming the knot, and a wiper arm with an integrated cutter for stripping the formed knot from the billhook in combination with the separation of the knot from the retained strands. When a bale reaches its desired length, a knot tying cycle is initiated. During this tying cycle, two knots are formed, the first knot 70 for closing the loop of the finished bale and the second knot 68a for starting the loop for the next bale.

In use, such conventional knotters, while being effective in binding bales with twine, result in small pieces of twine 62' and 64', commonly known as twine tails, being cut off after each knotting operation. These twine tails 62', 64' are obtained after the second knot 68a is formed and stripped of the billhook by the wiper arm. Although the amount of twine wasted is not great, the twine tails may build up in the vicinity of the knotter and ultimately cause knotter-tying problems. Typically, the twine tails fall onto the formed bale and are removed from the baler when the formed bale is pushed out of the bale. The twine tails then may drop on the field where they may cause or contribute to environmental pollution. Today, many farmers use synthetic twine instead of natural fibers. Unlike natural fibers, synthetic twine will not be broken down by atmospheric influences, and therefore, the synthetic twine tails remains longer on the field and may be picked up the next harvesting season by a baler. Twine tails picked up with the baled material may be eaten by livestock, potentially causing harm to the animals' heath. Additionally, these off-cuts limit the ability for balers to be used in certain conditions where foreign material isn't permitted in the bales.

While some knotter assemblies have been designed to operate with a knotting cycle that does not produce these twine tales, these design use a mechanical solution that increases the complexity to the knotter assembly. It would be desirable to have an improved knotter assembly that could function in substantially the same manners as conventional double knotters while eliminating the production of twine tales during the knotting operation.

WO2015/014616 (CNH) discloses a knotter assembly having the features of the precharacterising portion of claim 1.

### OVERVIEW OF THE INVENTION

In one embodiment, the invention is directed to a knotter assembly for use with a baler, the knotter assembly configured to form knots in strands of a binding material used to secure a formed bale. The knotter assembly is operable to produce two successive knots in a pair of strands of binding material during one full operating cycle of the knotter assembly to secure a formed bale. The knotter assembly includes a billhook configured to perform at least a first full rotation around its rotation axis during formation of a first one of the two successive knots and a second full rotation around its rotation axis during formation of a second one of the successive knots. The knotter assembly includes a twine holder for maintaining the pair of strands throughout the formation of the first one of the successive knots and to continue to maintain the pair of strands in a suitable position during the initial stage of the formation of the second one of the successive knots, and a cutter co-operating with the twine holder for severing the pair of strands during formation of the first one of the successive knots. The knotter assembly includes a twine disc assembly having a plurality of parallel discs mounted for rotation on shaft, wherein each disc of the plurality of discs has a plurality of notches spaced around the outer circumference of the twine disc, the plurality of notches including a first set of notches having a first shape and a second set of notches having a second shape different than the first shape. The first set of notches has a U shape and the second set of notches has a long J-hook shape

These and other features and advantages of this invention are described in, or are apparent from, the following detailed description of various exemplary embodiments of the systems and methods according to this invention.

### BRIEF DESCRIPTION OF THE DRAWINGS

The above mentioned and other features of this invention will become more apparent and the invention itself will be better understood by reference to the following description of embodiments of the invention taken in conjunction with the accompanying drawings, wherein:
FIG. 1 is side elevation of a baler;
FIG. 2 is a fragmentary, side elevational view of a portion of the baler having a knotter assembly;
FIG. 3A is a diagrammatic view of a complete and a partial double-knotted loop as known from the prior art;
FIG. 3B is a diagrammatic view of a complete and a partial double-knotted loop without the forming of twine tails as seen on FIG. 3A as performed by the baler of the present invention;
FIG. 4 is an enlarged, fragmentary, side elevational view of the knotter assembly , needle and associated mechanism in mid cycle;
FIG. 5A is a perspective view of a twine disc assembly of the knotter assembly of FIG.4;
FIG. 5B is a plan view of one of the twine discs of the twine disc assembly of FIG. 5A;
FIG. 6 is a plan view of a twine holder of the knotter assembly of FIG.4; and
FIG. 7 is a sectional of an exemplary embodiment of a billhook.

Corresponding reference characters indicate corresponding parts throughout the views of the drawings.

### DETAILED DESCRIPTION OF EXEMPLARY EMBODIMENTS

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments and is instead defined by the appended claims.

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right" are used as a matter of mere convenience, and are determined by standing at the rear of the machine facing in its normal direction of travel. Furthermore, the various components shown or described herein for any specific application of this invention can be varied or altered as anticipated by this invention and the practice of a specific application of any element may already by widely known or used in the art by persons skilled in the art and each will likewise not therefore be discussed in significant detail. In the description which follows and in certain passages already set forth, the principles of the present invention will be described in terms of "twine" and "knots" formed in such twine. While twine is used in the exemplary embodiment, the term binding material is intended to mean not only twine made from natural or synthetic fibers, but may also include metallic wire or other strapping material.

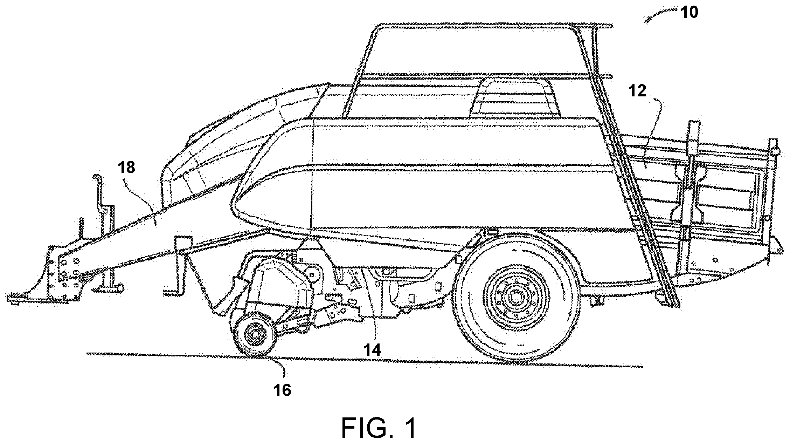

Turning to the figures, wherein like reference numerals represent like elements throughout the several views, FIG. 1 shows a baler 10 with a fore- and-aft extending baling chamber 12 mounted on a baler frame 14 within which bales of crop material are prepared. Crop material is collected with a pickup 16 below and slightly ahead of baling chamber 12 and then loaded up into the bottom of the chamber 12. Baler 10 may be hitched to a towing vehicle (not shown) by a tongue 18, and power for operating the various mechanisms of the baler may be supplied by the towing vehicle, such as the vehicle's power takeoff shaft.

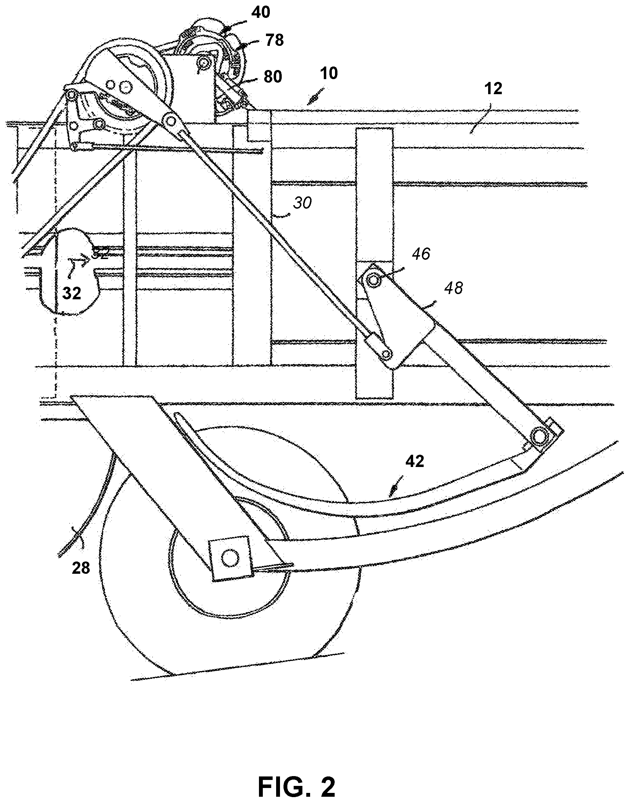

Turning now to FIG. 2, the bale chamber 12 receives material though a curved duct 28. A plunger 30 reciprocates within the bale chamber 12 to intermittently pack fresh charges of material from the duct 28 rearwardly in the chamber 26 in the direction of the arrow 32. When the bales reaches a predetermined size (this is determined by an appropriate bale length sensor (not shown)), a trigger engages a suitable clutch understood by one skilled in the art which in turn is connected to a knotter assembly 40 and a set of needles 42. As will be appreciated, the knotter assembly 40 comprises a set of individual knotters 40 provided crosswise on top of the bale chamber 12 at spaced intervals. Each knotter 40 has an associated needle 42 for assisting in forming an individual loop around a finished bale. When the bale needs tying, the knotter 40 and its respective needle 42 is connected to a source of driving power to initiate the tying operation. As the individual knotters 40 all operate in an identical manner, it suffices to describe the present invention in relation to only one such knotter 40. The needle 42 is swingably mounted on the bale chamber 12 and is swung back and forth across the bale chamber 12 by a linkage 48. The needle 42 has an "at-home" or rest position fully below the bale chamber 12 as illustrated in FIG. 2 and a "full-throw" position extending completely across the bale chamber 12.

FIG. 3A shows the binding loop 62 for a completed bale as already known for many years in the prior art. To the left of loop 62 is a partial loop 62a which is in the process of being formed. The top strand 64a emanates from a source of twine supply 72, while the bottom strand 66a emanates from an entirely separate, second source of twine supply 74. At the particular point in the sequence chosen for illustration, the knot 68a is in existence, and the bale is approaching that length where the needle 42 is ready to swing into operation and present the strands 64a and 66a to the knotter 40 to complete the first knot 70a (not shown in FIG. 3A). It is also shown in FIG. 3A that twine tails 62' and 64' are obtained between the last knot 70 of a first bale and the first knot 68a of a next bale.

In contrast therewith, FIG. 3B shows the binding loop 62 formed without the formation of twine tails 62' and 64' as obtained by the knotter assembly 40 of the present invention. In a finished bale, and still comparable to the prior art, the loop 62 is made from two strands of binding material, i.e., one strand 64 along the top side of the bale and a second strand 66 along the bottom side of the bale and its two opposite, vertical ends. The strands 64 and 66 together form the continuous loop 62. Together, they fully circumscribe the bale and are circumferential complements of one another. The two knots 68 and 70 appear in the loop 62 at those locations where the strands 64 and 66 are substantially end-to-end. This is typically in the area of the top corners of the bale. However, in contrast with the prior art, the first knot 68 of a bale according to the present invention, is desirably a so called loop-knot. This means that the ends of the strands 64 and 66 of the knot 68 are released from a retained position (to be described further) to form a small loop on top of the knot 68. The knot 68 itself, thus holds the ends of the strands 64 and 66 so twine tails need not be cut off and dropped on the bale.

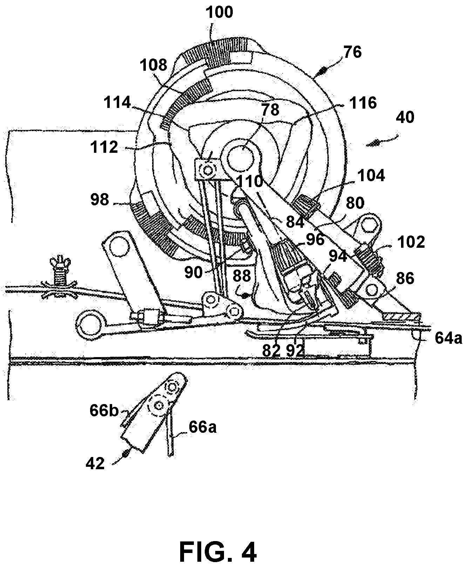

With this short explanation in mind, the details of the embodiment according to the present invention and as illustrated primarily in FIGS. 4-7 will now be described. The knotter assembly 40 is similar in many respects to the knotter assembly shown in U.S. Pat. No. 4,074,623. Turning now to FIG. 4, the knotter assembly 40, which is mountable to the frame 14 of the baler 10, is configured to take strands of twine, broadly binding material, looped around a finished bale and bind the strands with the two knots 68 and 70. The knotter assembly 40 comprises a generally circular knotter disc 76 that is secured to a drive shaft (not shown) for rotation with the latter. The knotter assembly 40 includes a frame 80 that supports a rotary bill hook 82 for rotation about an inclined axis 84 and a twine disc assembly 86 comprising a plurality of individual discs is positioned rearwardly adjacent the bill hook 82 for holding strands 64a and 66a in position for engagement by the bill hook 82 during rotation of the latter. The strands 64a and 66b are held in the twine disc assembly 86 by a retainer or twine holder 87. As known previously, a wiper arm 88 pivotably mounted to the frame 80 by a bolt 90 releases the connected strands from the twine disc assembly 86. The lower end of the wiper arm 88 is forked, defining a crotch 92 that opens away from the twine disc assembly 86 beneath the bill hook 82. The crotch 92 carries a cutter 94 between the bill hook 82 and the twine disc assembly 86 for severing the strands 64a, 66a in response to swinging movement of the wiper arm 88 in the proper direction. Such movement of the wiper arm 88 to operate the cutter 94 also serves to engage the proximal areas of the crotch 92 with a knot formed on the bill hook 82 for stripping such knot off of the bill hook 82.

In order to transmit driving power from the knotter disc 76 to the bill hook 82, the latter is provided with a pinion gear 96 which is disposed for meshing engagement with a pair of circumferentially spaced gear stretches 98 and 100 on the knotter disc 76. Similarly, driving power is transmitted to the discs of the twine disc assembly 86 through a worm gear drive 102 and a bevel gear 104 in position for sequential meshing engagement with a pair of circumferentially spaced gear sections 106 and 108 on the knotter disc 76. Power to swing the arm 88 about the pivot bolt 90 is obtained through a cam follower 110 at the upper end of the arm 88 beyond the pivot bolt 90 which is disposed within a cam track 112 on the knotter disc 76. A pair of circumferentially spaced cam shoulders 114 and 116 in the track 112 are positioned to sequentially engage the follower 110 to operate the latter. As many aspects of the knotter assembly 40 are well known in the art, further details about known aspects of the knotter assembly 40 need to be explained herein.

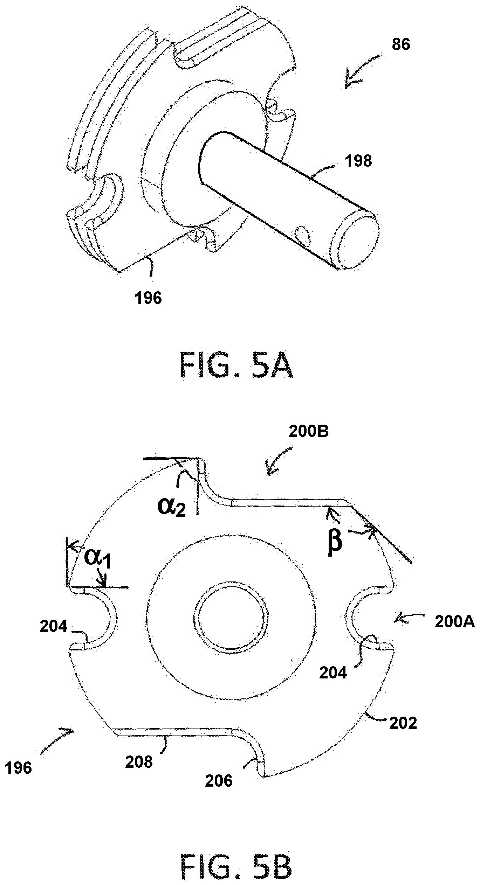

Turning now to FIGS. 5A and 5B, the twine disc assembly 86 comprises a plurality of parallel discs 196 mounted for rotation on shaft 198. Desirably, the shaft 198 is driven by the worm gear drive 102 and bevel gear 104 shown in FIG. 4. Each disc 196 has a plurality of notches 200 spaced around the outer circumference 202 of the twine disc 196. According to the invention, the plurality of notches 200 includes a first set of notches labeled 200A having a first shape and a second set of notches labeled 200B having a second shape different than the first shape. The first set of notches 200A has a U shape and the second set of notches 200B has a long J-hook shape. Desirably, in the U shape of the first set of notches 200A, each side 204 of the notch 200A approaches the outer circumference 202 at an angle α₁ of between about 70 and 110 degrees, more desirably between about 80 and 100 degrees, and in the illustrated embodiment at an angle α₁ of about 90 degrees. In one embodiment the angles α₁ for the two sides of the notch 200A are the same, however one skilled in the art will understand that there could be slight variations in the angles. Desirably, in the J-hook shape of the second set of notches 200B, a first side 206 of the notch 200B approaches the outer circumference 202 at an angle α₂ of between about 70 and 110 degrees, more desirably between about 80 and 100 degrees, and in the illustrated embodiment at an angle α₂ of about 90 degrees. In one embodiment α₁ is the same as α₂, however one skilled in the art will understand that there could be slight variations in the angles. A second side 208 of the notch 200B approaches the outer circumference 202 at an angle β of between about 110 and 160 degrees, more desirably at an angle of between about 120 and 150 degrees.

In the illustrated embodiment, there are two notches in the first set of notches 200A and they are positioned on the disc 196 so as to be on opposite sides of the disc 196 from each other, and there are two notches in the second set of notches 200B and they are positioned on the disc 196 so as to be on opposite sides of the disc 196 from each other. The twine disc assembly 86 is timed such that one of the first notches 200A is configured to retain the twines 64a and 66a when the knotter assembly 40 is forming the knot 70 which is tied first in the tying cycle, and one of the second notches 200B is configured to be used when holding the twines 64a and 66a when the knotter assembly 40 is forming the knot 68 which is tied second in the tying cycle.

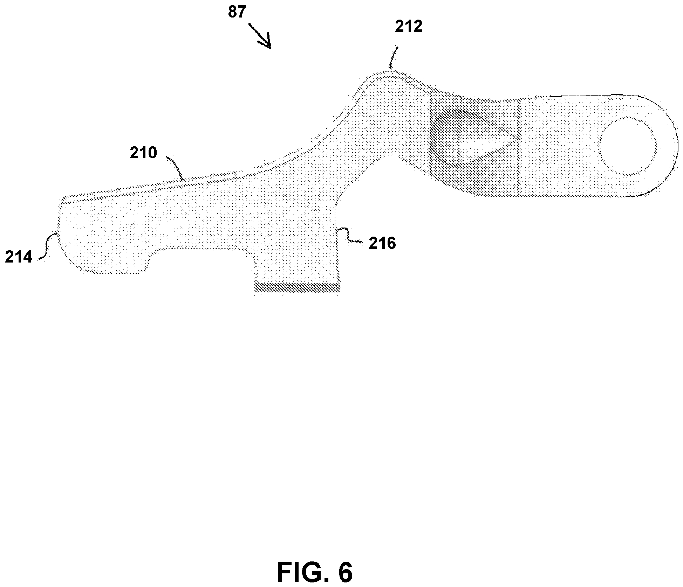

Turning now to FIG. 6, the twine holder 87 has a pressing portion 210 that slopes continually downward from a mid hump 212 to a distal end 214 of the twine holder 87. However, the shape of the pressing portion 210 is such that when the second notch 200B is holding the twines 64a and 66b to form the knot 70 and the twine disc 196 reaches the end of its rotation, there is very little tension on the twines 64a and 66b and all tension can easily be removed when twines are pulled by the wiper arm 88. This allows the components to release the twines 84a, 86a from the disc 86 without requiring a mechanical release mechanism. Desirably, the twine holder 87 has a base portion 216 that is substantially similar to those used in conventional knotter assemblies such as the one shown in the US 4,074,623 patent, but the pressing portion is re-profiled to work with the J-shaped notches 200B in the twine disc 196 so that no mechanical device is required to release twines.

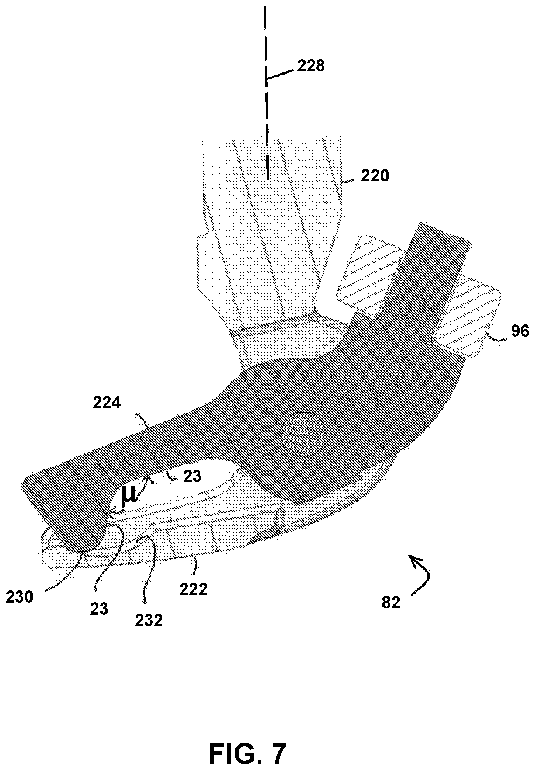

Turning now to FIG. 7, the billhook 82 is illustrated. The billhook 82 includes billhook casting 220 and a lower lip 222, and a billhook tongue 224 connected around a pivot point with the lower lip 222. During a tying cycle, the billhook 82 performs at least a first full rotation around its rotation axis 228 during a first knot forming cycle and a second full rotation around its rotation axis 228 during a second knot forming cycle. When the billhook 82 rotates around its axis 228, the cam follower 96 will push the upper lip 224 away from the lower lip 222. The billhook tongue 224 is provided at a free end thereof with a downwardly protruding end part 230, and the lower lip 222 is provided with an end recess 232 for receiving the protruding end part 230. In that way the billhook tongue 224 can be placed against or very close to the lower lip 222. The protruding end part 230 has a reverse tip angle µ between the trailing edge 234 and a lower surface 236 of the billhook tongue 224 that is greater than 90 degrees, and desirably greater than 110 degrees. While the billhook 82 can use the same billhook casting 220 as what is used in conventional knotter assemblies, such as shown in the US 4,074,623 patent, the angle µ causes the protruding end part 230 of the billhook tongue 224 to have a more rounded shape than conventional end parts on billhooks.

The knotter assembly 40 performs first knotting cycle in which the notch 200A of the twine disc 196 holds the twine to tie the knot 70 to finish the bale like a conventional double knotter such as the one shown in the US 4,074,623 patent. In presenting the twines 64a and 66a, the needle 42 drapes the twines across the billhook 82 and thence into one of the notches 200A of the twine disc assembly 86. Upon rotation of the twine disc assembly 86, in combination with the pressing twine holder 87, causes the twines 64a, 66a to be firmly griped preventing their escape as the billhook 82 begins its rotation. Typically, the twine disc assembly 86 rotates a quarter of a turn and clamps the twines 64a and 66a firmly together in one of the notches 200A. The needle 42 then moves downward. During the down travel of the needle 42, the two twines 64a, 66a on the back of the needle are placed in the next adjacent notch 200B of the twine disc assembly 86 for the second knot 68. During formation of the first knot 70, the wiper arm 88, and hence the cutter 94, swings across that portion of the twines 64a, 66a between the billhook 82 and the twine disc assembly 86, thereby severing the same. To complete the knot formation, the wiper arm 88 engages the twines 64a and 66a which are retained in a twisted manner around the billhook 82. But on the second knot 68, when it is time when the cut would have happened on a conventional knotter assembly, the twine 64a, 66a is released from the disc assembly 86 by the geometry of the notch 200B in the discs 196 and the profile of the lower portion of the twine holder 87. The cutter 94 of the wiper arm 88 pulls the twine 64a, 66a from the disc assembly 86 instead of cutting it. The shape of the billhook tongue 224 allows the twine 64a, 66a to slip out of the billhook 82 without having to pull the end of the tail back through the knot 68. The second knot 68 on this knotter design can be either a McCormick or Deering style without leaving an off-cut of twine. This can depend on how the tensions of the knotter assembly 40 are adjusted.

The foregoing has broadly outlined some of the more pertinent aspects and features of the present invention. These should be construed to be merely illustrative of some of the more prominent features and applications of the invention.

## Claims

1. A knotter assembly (40) for use with a baler (10), the knotter assembly operable to produce two successive knots (70, 68) in a pair of strands (64, 66) of binding material during one full operating cycle of the knotter assembly (40) to secure a formed bale, the knotter assembly (40) comprising a billhook (82) configured to perform at least a first full rotation around its rotation axis (228) during formation of a first one (70) of said two successive knots and a second full rotation around its rotation axis (228) during formation of a second one (68) of said successive knots, a twine holder (87) for maintaining said pair of strands throughout the formation of the first one (70) of said successive knots and to continue to maintain said pair of strands in a suitable position during the initial stage of the formation of the second one (68) of said successive knots, a cutter (94) co-operating with said twine holder (87) for severing said pair of strands (64,66) during formation of said first one (70) of said successive knots, and a twine disc assembly (86), the twine disc assembly (86) comprising a plurality of parallel discs (196) mounted for rotation on shaft (198), wherein each disc of the plurality of parallel discs (196) has a plurality of notches (200) spaced around the outer circumference (202) of the disc, **characterised in that** the plurality of notches (200) includes a first set of notches (200A) having a first shape and a second set of notches (200B) having a second shape different than the first shape, the first set of notches (200A) consisting of two notches that are positioned on each disc (196) so as to be on opposite sides of the outer circumference (202) of the disc (196) from each other, and the second set of notches (200B) consists of two notches that are positioned on each disc (196) so as to be on opposite sides of the outer circumference (202) of the disc (196) from each other.

2. The knotter assembly of claim 1 wherein the first set of notches (200A) has a U shape and the second set of notches (200B) has a long J-hook shape.

3. The knotter assembly of claim 2 wherein the U shape of the first set of notches (200A) is such that each side 204 of the notch approaches the outer circumference at an angle α1 of between 80 and 100 degrees.

4. The knotter assembly of claim 3 wherein the angles α1 for the two sides of the notch are equal.

5. The knotter assembly of claim 2 wherein the in the J-hook shape of the second set of notches (200B) is such that a first side (206) of the notch approaches the outer circumference at an angle α2 of between 80 and 100 degrees and a second side (208) of the notch approaches the outer circumference at an angle β of between 120 and 150 degrees.

6. The knotter assembly of claim 2 wherein the twine disc assembly (86) is timed such that one of the first notches (200A) is configured to retain the strands (64,66) when the knotter assembly is forming the knot which is tied first in the tying cycle, and one of the second notches (200B) is configured to be used when holding the strands (64,66) when the knotter assembly is forming the knot which is tied second in the tying cycle.

## Patentansprüche

1. Knoter-Anordnung (40) zur Verwendung mit einer Ballenpresse (10), wobei die Knoter-Anordnung betreibbar ist, um während eines vollständigen Betriebszyklus der Knoter-Anordnung (40), um einen geformten Ballen zu sichern, zwei aufeinanderfolgende Knoten (70, 68) in einem Paar von Strängen (64, 66) von Bindematerial zu produzieren, wobei die Knoter-Anordnung (40) einen Knoterhaken (82) aufweist, der ausgebildet ist, um mindestens eine erste vollständige Drehung um seine Rotationsachse (228) während des Ausformens eines ersten (70) der beiden aufeinanderfolgenden Knoten und eine zweite vollständige Drehung um seine Rotationsachse (228) während des Ausformens eines zweiten (68) der aufeinanderfolgenden Knoten auszuführen, einen Schnurhalter (87) zum Halten des Paars von Strängen während des Ausformens des ersten (70) der aufeinanderfolgenden Knoten und um während der initialen Phase des Ausformens des zweiten (68) der aufeinanderfolgenden Knoten fortzufahren, das Paar von Strängen in einer geeigneten Position zu halten, ein Schneidwerkzeug (94), das während des Ausformens des ersten (70) der aufeinanderfolgenden Knoten zum Durchtrennen des Paars von Strängen (64, 66) mit dem Schnurhalter (87) zusammenwirkt, und einer Schnurscheibenanordnung (86), wobei die Schnurscheibenanordnung (86) eine Mehrzahl von parallelen Scheiben (196) aufweist, die für eine Drehung auf einer Welle (198) montiert sind, wobei jede Scheibe der Mehrzahl von parallelen Scheiben (196) eine Mehrzahl von Kerben (200) aufweist, die längs des äußeren Umfangs (202) der Scheibe beabstandet sind, **dadurch gekennzeichnet, dass** die Mehrzahl von Kerben (200) einen ersten Satz von Kerben (200A) mit einer ersten Gestalt und einen zweiten Satz von Kerben (200B) mit einer zweiten Gestalt, die anders ist als die erste Gestalt, umfasst, wobei der erste Satz von Kerben (200A) aus zwei Kerben besteht, die so an jeder Scheibe (196) positioniert sind, dass sie zueinander auf gegenüberliegenden Seiten des äußeren Umfangs (202) der Scheibe (196) liegen, und wobei der zweite Satz von Kerben (200B) aus zwei Kerben besteht, die an jeder Scheibe (196) so positioniert sind, dass sie zueinander auf gegenüberliegenden Seiten des äußeren Umfangs (202) der Scheibe (196) liegen.

2. Knoter-Anordnung nach Anspruch 1, **wobei** der erste Satz von Kerben (200A) eine U-Gestalt aufweist und der zweite Satz von Kerben (200B) eine lange J-Haken-Gestalt aufweist.

3. Knoter-Anordnung nach Anspruch 2, **wobei** die U-Gestalt des ersten Satzes von Kerben (200A) derart ist, dass sich jede Seite (204) der Kerbe dem äußeren Umfang unter einem Winkel α1 zwischen 80 und 100 Grad nähert.

4. Knoter-Anordnung nach Anspruch 3, **wobei** die Winkel α1 für die beiden Seiten der Kerbe gleich sind.

5. Knoter-Anordnung nach Anspruch 2, **wobei** die J-Haken-Gestalt des zweiten Satzes von Kerben (200B) derart ist, dass sich eine erste Seite (206) der Kerbe dem äußeren Umfang unter einem Winkel α2 zwischen 80 und 100 Grad nähert und sich eine zweite Seite (208) der Kerbe dem äußeren Umfang unter einem Winkel β zwischen 120 und 150 Grad nähert.

6. Knoter-Anordnung nach Anspruch 2, **wobei** die Schnurscheibenanordnung (86) derart getimt ist, dass eine der ersten Aussparungen (200A) ausgebildet ist, um die Stränge (64, 66) zurückzuhalten, wenn die Knoter-Anordnung den Knoten, welcher zuerst in dem Bindezyklus gebunden wird, formt, und wobei eine der zweiten Aussparungen (200B) ausgebildet ist, um bei einem Halten der Stränge (64, 66) verwendet zu werden, wenn die Knoter-Anordnung den Knoten, welcher als zweiter in dem Bindezyklus gebunden wird, formt.

## Revendications

1. Ensemble de formation de noeud (40) destiné à être utilisé avec une presse à balle (10), l'ensemble de formation de noeud pouvant servir à produire deux noeuds (70, 68) successifs sur une paire de fils (64, 66) de matériau de liaison pendant un cycle opérationnel complet de l'ensemble de formation de noeud (40) de manière à fixer une balle formée, l'ensemble de formation de noeud (40) comprenant un crochet (82) configuré de manière à réaliser au moins une première rotation complète autour de son axe de rotation (228) au cours de la formation d'un premier (70) desdits deux noeuds successifs et une seconde rotation complète autour de son axe de rotation (228) au cours de la formation d'un second (68) desdits noeuds successifs, un support de ficelle (87) destiné à maintenir ladite paire de fils au cours de la formation du premier (70) desdits noeuds successifs et à continuer à maintenir ladite paire de fils dans une position appropriée au cours de l'étape initiale de la formation du second (68) desdits noeuds successifs, un outil de coupe (94) coopérant avec ledit support de ficelle (87) afin de couper ladite paire de fils (64, 66) au cours de la formation dudit premier (70) desdits noeuds successifs, et un ensemble de disque de ficelle (86), l'ensemble de disque de ficelle (86) comprenant une pluralité de disques parallèles (196) montés afin de pouvoir tourner par rapport à l'axe (198), dans lequel chaque disque de la pluralité des disques parallèles (196) comporte une pluralité d'encoches (200) réparties autour de la circonférence externe (202) du disque, **caractérisé en ce que** la pluralité d'encoches (200) comporte un premier ensemble d'encoches (200A) présentant une première forme et un second ensemble d'encoches (200B) présentant une seconde forme différente de la première forme, le premier ensemble d'encoches (200A) étant constitué de deux encoches qui sont positionnées sur chaque disque (196) de manière à se trouver sur des côtés opposés l'un de l'autre de la circonférence externe (202) du disque (196), et le second ensemble d'encoches (200B) étant constitué de deux encoches qui sont positionnées sur chaque disque (196) de manière à se trouver sur des côtés opposés l'un de l'autre de la circonférence externe (202) du disque (196).

2. Ensemble de formation de noeud selon la revendication 1, dans lequel le premier ensemble d'encoches (200A) présente une forme en U et le second ensemble d'encoches (200B) présente une forme de crochet en J allongée.

3. Ensemble de formation de noeud selon la revendication 2, dans lequel la forme en U du premier ensemble d'encoches (200A) est telle que chaque côté 204 de l'encoche se rapproche de la circonférence externe suivant un angle α1 compris entre 80 et 100 degrés.

4. Ensemble de formation de noeud selon la revendication 3, dans lequel les angles α1 pour les deux côtés de l'encoche sont égaux.

5. Ensemble de formation de noeud selon la revendication 2, dans lequel dans la forme de crochet en J du second ensemble d'encoches (200B) est tel qu'un premier côté (206) de l'encoche se rapproche de la circonférence externe suivant un angle α2 compris entre 80 et 100 degrés et un second côté (208) de l'encoche se rapproche de la circonférence externe suivant un angle β compris entre 120 et 150 degrés.

6. Ensemble de formation de noeud selon la revendication 2, dans lequel l'ensemble de disque de ficelle (86) est séquencé de telle sorte qu'une des premières encoches (200A) est configurée de manière à retenir les fils (64, 66) lorsque l'ensemble de formation de noeud forme le noeud qui est réalisé en premier au cours du cycle de liaison, et l'une des secondes encoches (200B) est configurée de manière à être utilisée afin de retenir les fils (64, 66) lorsque l'ensemble de formation de noeud forme le noeud qui est réalisé en second au cours du cycle de liaison.
